Europäisches Patentamt

European Patent Office

Office européen des brevets

(11) Publication number: **0 498 357 A2**

# EUROPEAN PATENT APPLICATION

(21) Application number: **92101790.1**

(22) Date of filing: **03.02.92**

(30) Priority: **07.02.91 JP 16366/91**

(43) Date of publication of application:
**12.08.92 Bulletin 92/33**

(84) Designated Contracting States:
**BE CH DE FR GB LI NL**

(51) Int. Cl.⁵: **A23G 3/28**, A23G 3/20,
A23G 1/20

(71) Applicant: **AKUTAGAWA CONFECTIONARY
CO., LTD.
44-2, 1-chome, Komagome, Toshima-ku
Tokyo(JP)**

(72) Inventor: **Akutagawa, Tokuji
7-1-30-601, Komagome
Toshima-ku, Tokyo(JP)**

(74) Representative: **Herrmann-Trentepohl,
Werner, Dipl.-Ing. et al
Kirschner, Grosse, Bockhorni Forstenrieder
Allee 59
W-8000 München 71(DE)**

(54) Method for producing three-dimensional decorative chocolate cake having printed pattern.

㊿ A method for producing a three-dimensional decorative chocolate cake (7, 7a) having a printed pattern (5, 5a) thereon involves (a) charging a first chocolate material (3, 3a) in a fluid state into a recess (2, 2a) provided on a flat upper surface of a first mold (1, 1a), (b) printing a pattern (5, 5a) on the flat upper surface of the first mold (1, 1a), (c) placing a bottomless second mold (6, 6a) on the flat upper surface for surrounding the recess (2, 2a) and the pattern (5, 5a), (d) charging a second chocolate material (3', 3'a) in a fluid state in the second mold (6, 6a), and (e) cooling and solidifying the first and second chocolate materials (3, 3a, 3', 3'a) to bond each other and simultaneously transferring the pattern (5, 5a) on the flat upper surface of the first mold (1, 1a) to the second chocolate material (3', 3'a), followed by extracting the chocolate materials (3, 3a, 3', 3'a) out of the first and second molds (1, 1a, 6, 6a).

FIG.1(d)

EP 0 498 357 A2

## BACKGROUND OF THE INVENTION

This invention relates to a method for producing a three-dimensional decorative chocolate cake having a printed pattern.

The methods for producing a multicolor decorative chocolate cake carrying a variety of printed patterns have hitherto been known and the chocolate cakes prepared by these methods are presently manufactured and presented to the market. For example, Japanese Laid-open Patent Application No. 57-58850 (1982) discloses a method for preparing a chocolate cake having a printed pattern, according to which a mold of a desired contour is placed on a previously screen-printed smooth surface plate and a melted chocolate material is poured into the inside of the mold, which is detached after the chocolate material is solidified to produce the chocolate cake having the printed pattern.

Although two-dimensional decorative chocolate cakes having a variety of printed patterns may be produced with the above described known methods, it is impossible with these known methods to prepare decorative chocolate having three-dimensional figurative portions, such as in the form of animals or plants. The result is that children as main consumers are not visually satisfied with the conventional chocolate cakes, so that a potential need for the chocolate products is decreased.

## SUMMARY OF THE INVENTION

It is an object of the present invention to provide a method for producing a chocolate cake having a variety of printed patterns and a three-dimensional decorative portion.

For accomplishing the above object, the present invention provides a method for producing a three-dimensional decorative chocolate cake having a printed pattern thereon comprising,

(a) charging a first chocolate material in a fluid state into a recess provided on a flat upper surface of a first mold,

(b) printing a pattern on the flat upper surface of the first mold,

(c) placing a bottomless second mold on the flat upper surface for surrounding the recess and the pattern,

(d) charging a second chocolate material in a fluid state in the second mold, and

(e) cooling and solidifying the first and second chocolate materials to bond each other and simultaneously transferring the pattern on the flat upper surface of the first mold to the second chocolate material, followed by extracting the chocolate materials out of the first and second molds.

## BRIEF DESCRIPTION OF THE DRAWINGS

Figs. 1(a) to 1(e) are schematic views showing process steps of a method according to an embodiment of the present invention.

Fig. 2 is a perspective view showing a three-dimensional decorative chocolate cake produced by the production process shown in Fig. 1.

Figs. 3(a) to 3(e) are schematic views showing process steps of a method according to another embodiment of the present invention.

Fig. 4 is a perspective view showing a three-dimensional decorative chocolate cake produced by the production process shown in Fig. 3.

## PREFERRED EMBODIMENTS OF THE INVENTION

By referring to the drawings, a method for the preparation of a three-dimensional decorative chocolate cake having a printed pattern thereon according to the present invention will be explained in detail.

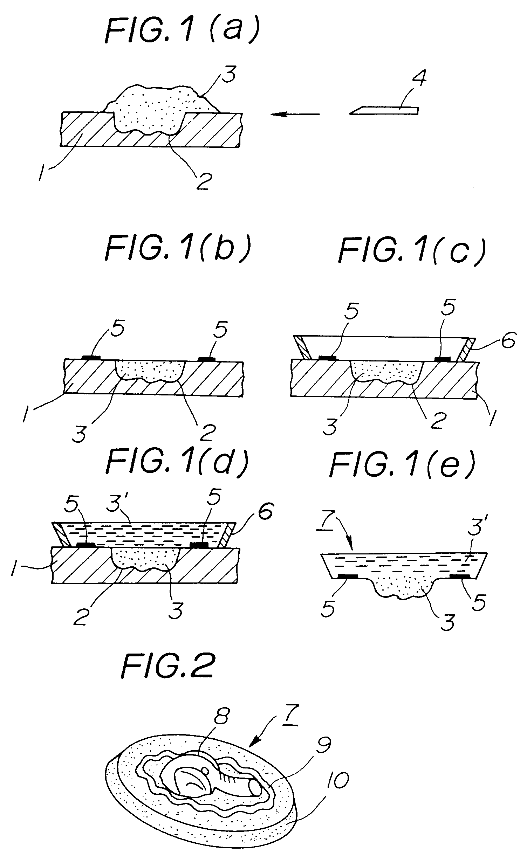

In Figs. 1(a) to 1(e), the process steps of the method according to a first embodiment of the present invention are shown schematically.

In a recess 2 having the shape of an elephant's head of a flat molding plate 1 formed of a tough material such as hygienically acceptable metal or plastics, a white-hued fluid chocolate material 3 at a temperature of about 26° to 32°C is charged in excess from a charger (not shown) and the chocolate material 3 which overflows the recess 2 is scraped off by a scraper 4, so that the chocolate surface is flush with an opening surface of the recess 2 of the molding plate 1, as shown in Fig. 1-(a). The chocolate material 3 thus charged into the recess 2 is then passed through a solidifying device, such as a cooling tunnel (not shown) maintained at about 4° to 7°C so as to be solidified to more or less extent or more preferably solidified completely. On the surface region around the recess 2 of the flat molding plate is applied a printed pattern 5 by silk printing and the like, as shown in Fig. 1(b). A bottomless molding box 6 of plastics, etc. having an inverted trapezoidal cross-section profile is placed on the flat molding plate 1 for surrounding the printed pattern 5, as shown in Fig. 1 (c). A fluid brown-hued chocolate material 3' at a temperature of about 26° to 32°C is charged into the mold box 6 and solidified completely through the cooling tunnel (not shown) similar to that described above (Fig. 1(d)). The flat molding plate 1 and the molding box 6 are inverted in their positions and the chocolate materials 3, 3' are extracted from the flat molding plate 1 and the molding box 6 to produce a three-dimensional decorative cake 7 having the printed pattern 7 thereon (Fig. 1(e)).

Fig. 2 shows, in a perspective view, the three-dimensional decorative chocolate cake 7 having the printed pattern produced from the process steps shown in Figs. 1(a) to 1(e). As will be seen from these figures and the above explained process steps, the cake 7 is composed of a disk 10 of the brown-hued chocolate material 3', an elephant's head 8 of the white-hued chocolate material 3 positioned generally centrally of the disk 10 and the wave-shaped printed pattern 9 surrounding the central elephant's head 8.

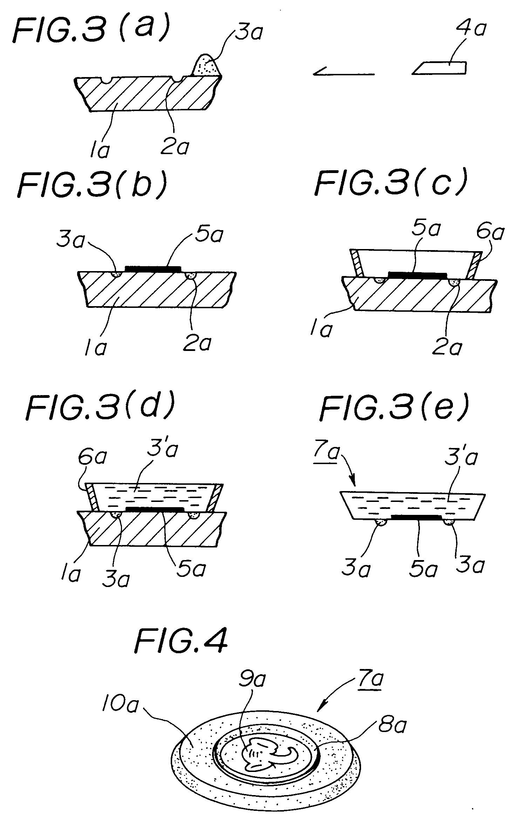

In Figs. 3(a) to 3(e), the process steps of the method for preparing a three-dimensional decorative chocolate cake having a printed pattern according to a second embodiment of the present invention are shown schematically.

On a flat molding plate 1a of a tough material such as metal or plastics provided with a fluted recess 2a, an amount of a fluid white-hued chocolate material 3a at a temperature of about 26° to 32°C is deposited (Fig. 3(a)) and thrust by a scraper 4a into the inside of the recess 2a. An excess amount of the chocolate material is removed from the surface of the flat molding plate 1a by the scraper 4a. The chocolate material 3 thus charged into the recess 2a is transported through a cooling solidifying device, such as a cooling tunnel (not shown) maintained at about 4° to 7°C so as to be solidified to a more or less extent or preferably completely. A printed pattern 5a is then applied to an area in the inside of the recess 2a such as by silk printing (Fig. 3(b)). A bottomless molding box 6a of plastics etc. having an inverted trapezoidal cross-sectional profile is then placed for surrounding the printed pattern 5a and the recess 2a (Fig. 3(c)). A fluid brown-tinted chocolate material 3'a at a temperature of about 26° to 32°C, is then charged into the inside of the molding box 6a, and solidified completely through the cooling tunnel (not shown) which is similar to that described above (Fig. 3(d)). The flat molding plate 1a and the molding box 6a are then inverted in their positions and the chocolate materials 3a, 3'a are extracted to produce a three-dimensional decorative chocolate cake 7a having a printed pattern (Fig. 3(e)).

Fig. 4 shows, in a perspective view, the three-dimensional decorative chocolate cake having the printed pattern from the process steps of Figs. 3(a) to 3(e). It is seen from these figures and from the above described process steps that the cake 7a is composed of a disk 10a formed of the brown-hued chocolate material 3'a, a printed pattern of an elephant 9a at a central portion of the disk 10a and an annular portion 8a of the white-hued chocolate material 3'a surrounding the printed pattern 9a.

Our experiments indicated that the printed patterns in the above embodiments were transferred to the chocolate materials on cooling the chocolate materials. It may be assumed that the printed patterns are melted to some extent under the effect of the temperature of the charged chocolate material so as to be intimately bonded to the chocolate material.

Although the printed pattern is applied in the above described embodiments by silk printing which is among the screen printing methods, it may be applied by any other type of screen printing. An ink material used for printing needs to be non-toxic so that tinted edible ink which is dissolved in the form of sludge or cream is preferred. Although an oily ink is desirable because it is water-proof, it may also be of an aqueous type. If a number of colors are used in printing, different colors are applied sequentially, as in the case of customary multi-color printing. It is preferred that the ink of a first color be coagulated or dried before the ink of the next color is applied.

The molds used for the molding process, that is the flat molding plate and the molding box, are heated previously to about the same temperature as that of the fluid chocolate material to be charged. Since the temperature difference between the inside and the outside of the mold may be equilibrated in this manner, a chocolate cake presenting satisfactory luster and a smooth surface may be produced.

The shape of the recess may be in the form of various animals or plants, mountains, men or women or patterns, in addition to the elephant's head or annulus, as patterns, in addition to the elephant's head or annulus, as in the preceding embodiments.

It will be appreciated from the above that a three-dimensional decorative chocolate cake which is visually more attractive than the conventional decorative chocolate cakes having the printed pattern may be produced by the method of the present invention more easily and reliably. Besides, a chocolate cake having unique flavor may be produced by using different chocolate materials for the three-dimensional and two-dimensional portions of the chocolate cake.

## Claims

1. A method for producing a three-dimensional decorative chocolate cake (7, 7a) having a printed pattern (5, 5a) thereon comprising,

   (a) charging a first chocolate material (3, 3a) in a fluid state into a recess (2, 2a) provided on a flat upper surface of a first mold (1, 1a),

   (b) printing a pattern (5, 5a) on said flat upper surface of said first mold (1, 1a),

   (c) placing a bottomless second mold (6, 6a) on said flat upper surface for surrounding said recess (2, 2a) and said pattern (5, 5a),

(d) charging a second chocolate material (3', 3'a) in a fluid state in said second mold (6, 6a), and

(e) cooling and solidifying said first and second chocolate materials (3, 3a, 3', 3'a) to bond each other and simultaneously transferring said pattern (5, 5a) on said flat upper surface of said first mold (1, 1a) to said second chocolate material (3', 3'a), followed by extracting the chocolate materials (3, 3a, 3', 3'a) out of said first and second molds (1, 1a, 6, 6a).

2. A method as claimed in claim 1 wherein said pattern (5) is printed in a region of said flat upper surface surrounding said recess (2) on said first mold (1).

3. A method as claimed in claim 1 wherein said pattern (5a) is printed in a region of said flat upper surface of said first mold (1a) surrounded by said recess (2a).

4. A method as claimed in any one of claims 1 to 3 wherein said first and second chocolate materials (3, 3a, 3', 3'a) have different hues.

*FIG.1 (a)*

*FIG.1(b)*

*FIG.1(c)*

*FIG.1(d)*

*FIG.1(e)*

*FIG.2*

# FIG.3 (a)

3a

4a

# FIG.3 (b)

3a   5a

1a   2a

# FIG.3 (c)

5a   6a

1a   2a

# FIG.3 (d)

6a   3'a

1a   3a   5a

# FIG.3 (e)

7a   3'a

3a   5a   3a

# FIG.4

9a   7a

10a   8a